# EUROPÄISCHE PATENTSCHRIFT

(11) **EP 2 614 597 B1**
(45) Veröffentlichungstag und Bekanntmachung des Hinweises auf die Patenterteilung: **12.10.2016**
(21) Anmeldenummer: 11745490.0
(22) Anmeldetag: 10.08.2011
(51) Int. Cl.: H04B 3/46, H04B 3/54, H04L 25/02, H04L 12/10

(54) **VORRICHTUNG UND VERFAHREN ZUR DATENÜBERTRAGUNG UND ENERGIEÜBERTRAGUNG ÜBER EINE LEITUNG**
APPARATUS AND METHOD FOR DATA TRANSMISSION AND POWER TRANSMISSION VIA A LINE
DISPOSITIF ET PROCÉDÉ DE TRANSMISSION DE DONNÉES ET DE TRANSMISSION D'ÉNERGIE SUR UNE LIGNE

(30) Priorität: 10.09.2010 DE 102010044973
(43) Veröffentlichungstag der Anmeldung: 17.07.2013
(73) Patentinhaber: Sew-Eurodrive GmbH&Co. Kg Abt. Ecg, 76646 Bruchsal (DE)
(72) Erfinder: HUA, Zhidong, 76137 Karlsruhe (DE)
(86) Internationale Anmeldenummer: PCT/EP2011/003999
(87) Internationale Veröffentlichungsnummer: WO 2012/031657

(56) Entgegenhaltungen:
- DE-A1- 1 616 388
- DE-A1- 3 619 906
- DE-A1- 4 100 613
- DE-A1- 19 963 620
- DE-B- 1 082 637
- NICHOLAS V C H ET AL: "A power LAN for telecommunication power supply equipment", PROCEEDINGS OF THE REGION TEN CONFERENCE (TENCON). BEIJING, OCT. 19 - 21, 1993; [PROCEEDINGS OF THE REGION TEN CONFERENCE (TENCON)], BEIJING, IAP, CN, Bd. -, 19. Oktober 1993 (1993-10-19), Seiten 24-27, XP010114162, DOI: 10.1109/TENCON.1993.327913 ISBN: 978-0-7803-1233-3

## Beschreibung

Die Erfindung betrifft eine Vorrichtung und ein Verfahren zur Datenübertragung und Energieübertragung über eine Leitung.

Aus der DE 10 2007 032643 A1 ist eine Vorrichtung zur berührungslosen Leistungsübertragung, ein Verfahren zur Übermittlung eines Datensignals und eine Anlage zur berührungslosen Leistungsübertragung an bewegliche Verbraucher bekannt.

**Aus der** DE 199 63 620 A1 **ist ein Verfahren zur Bestimmung des Übertragungsverhaltens einer Transmissionsstrecke bekannt.**

**Aus der** DE 41 00 613 A1 **ist ein Verfahren zur Einkoppelung eines Störsignals zwischen einem Nutzsignal übertragendes Leitungssystem und einer Übertragungsanordnung bekannt.**

**Aus der** DE 10 82 637 B **ist ein Verfahren zur Ermittlung der Anteile eines Klirrgeräusches bei einem Vielkanal-FM-Richtfunksystem bekannt.**

**Aus der** DE 16 16 388 A1 **ist ein Messverfahren zur Durchführung von Klirrmessungen in Mehrkanal-Übertragungssystemen bekannt.**

**Aus der** DE 36 19 906 A1 **ist ein adaptives Übermittelungssystem bekannt.**

**Aus der Veröffentlichung von** NICHOLAS V C ET AL:"A power LAN for telecommunication power supply equipment ", PROCEEDINGGS OF THE REGION TEN CONFERENCE (TENCON), BEJIING, OCT. 19 -21, 1993, IAP, CN, Bd - , 19. Oktober 1993, Seiten 24-27 **ist bekannt, ein LAN Netz zwischen den individuellen intelligenten Leistungsversorgungseinheiten vorzusehen.**

Der Erfindung liegt daher die Aufgabe zugrunde, eine Vorrichtung und ein Verfahren zur Datenübertragung und Energieübertragung über eine Leitung weiterzubilden, wobei die Bestimmung der Dämpfung der Leitung besonders einfach ist.

Erfindungsgemäß wird die Aufgabe bei dem Verfahren zur Datenübertragung und Energieübertragung über eine Leitung nach den in Anspruch 1 angegebenen Merkmalen und bei der Vorrichtung zur Datenübertragung und Energieübertragung über eine Leitung nach den in Anspruch 12 angegebenen Merkmalen gelöst.

Wichtige Merkmale der Erfindung bei dem Verfahren zur Daten und Energieübertragung über eine Leitung für eine PowerLan-Verbindung sind, dass die Leitung zur Energieübertragung und zur Datenübertragung genutzt wird, wobei ein erstes Modem und ein zweites Modem zur Datenübertragung an die Leitung angeschlossen sind, wobei das erste Modem einen Rauschwert an einer ersten Position auf der Leitung bestimmt, das zweite Modem einen entsprechenden Rauschwert an einer zweiten Position auf der Leitung bestimmt, und eine Dämpfung der Leitung als Verhältnis des Rauschwertes zum entsprechenden Rauschwert bestimmt wird. Von Vorteil ist dabei, dass die Bestimmung der Dämpfung jederzeit möglich ist und kein Probesignal gesendet werden muss.

Bei einer vorteilhaften Ausgestaltung werden der Rauschwert und der entsprechende Rauschwert spektral für denselben Frequenzwert bestimmt und insbesondere werden für mehrere Frequenzwerte, besonders bevorzugt als je eine Funktion eines Frequenzbereiches bestimmt. Von Vorteil ist dabei, dass die Bestimmung der Dämpfung besonders einfach ist.

Bei einer weiteren vorteilhaften Ausgestaltung des Verfahrens wird das Rauschen durch die Energieübertragung hervorgerufen. Von Vorteil ist dabei, dass kein Probesignal zur Bestimmung der Dämpfung erzeugt werden muss.

Bei einer weiteren vorteilhaften Ausgestaltung des Verfahrens wird die Energie zur Energieübertragung mittels eines Frequenzumrichters, vorzugsweise Zwei-Brücken Frequenzumrichters, in die Leitung eingespeist, wobei das erste und zweite Rauschen durch die Schaltimpulse des leitungsseitigen Wechselrichters des Frequenzumrichters hervorgerufen wird. Von Vorteil ist dabei, dass das Rauschen zur Bestimmung der Dämpfung einfach verfügbar ist.

Bei einer weiteren vorteilhaften Ausgestaltung des Verfahrens wird für die Energieübertragung ein Frequenzbereich zwischen 10 und 500 kHz vorzugsweise zwischen 50 und 100 kHz oder zwischen 20 und 60 kHz, insbesondere eine Frequenz aus diesen Bereichen verwendet. Von Vorteil ist dabei, dass die Frequenz nicht hörbar ist.

Bei einer weiteren vorteilhaften Ausgestaltung des Verfahrens wird für die Datenübertragung ein Frequenzbereich größer 0,1 MHz, vorzugsweise zwischen 0,5 und 100 MHz, insbesondere zwischen 0,9 und 1,5 MHz, verwendet. Von Vorteil ist dabei, dass genügend Bandbreite zur Datenübertragung zur Verfügung steht.

Bei einer weiteren vorteilhaften Ausgestaltung des Verfahrens wird für die Datenübertragung ein anderer Frequenzbereich verwendet als für die Energieübertragung. Von Vorteil ist dabei, dass die Datenübertragung einfach von dem Signal der Energieübertragung getrennt werden kann.

Bei einer weiteren vorteilhaften Ausgestaltung des Verfahrens liegt die Dämpfung des Frequenzbereiches zur Datenübertragung unterhalb eines kritischen Wertes. Von Vorteil ist dabei, dass eine sichere Datenübertragung gewährleistet werden kann.

Bei einer weiteren vorteilhaften Ausgestaltung des Verfahrens wird zur Datenübertragung ein OFDM-Verfahren verwendet, und insbesondere werden nur die Kanäle des OFDM-Verfahrens verwendet, welche eine Dämpfung der Leitung unterhalb eines kritischen Wertes aufweisen. Von Vorteil ist dabei, dass ein sicherer Datenübertragung gewährleistet werden kann und die benutzbaren Kanäle einfach bestimmbar sind.

Bei einer weiteren vorteilhaften Ausgestaltung des Verfahrens wird das erste Modem ortsfest angeordnet und das zweite Modem in einer mobilen Einheit angeordnet, wobei die mobile Einheit entlang der Leitung bewegt wird, wobei die Leitung vorzugsweise langgestreckt ist, wobei die Daten der Datenübertragung und die Energie der Energieübertragung berührungslos von der mobilen Einheit von der Leitung abgegriffen werden. Von Vorteil ist dabei, dass zwischen den Modems eine sichere Datenübertragung einfach möglich ist.

Bei einer weiteren vorteilhaften Ausgestaltung des Verfahrens werden abhängig von der Position der mobilen Einheit unterschiedliche Kanäle verwendet. Von Vorteil ist dabei, dass immer eine sichere Datenübertragung möglich ist.

Wichtige Merkmale der Vorrichtung zur Daten und Energieübertragung über eine Leitung für eine PowerLan-Verbindung sind, dass die Vorrichtung Mittel zum Ausführen des Verfahrens umfasst. Von Vorteil ist dabei, dass das Verfahren ausführbar ist.

Bei einer vorteilhaften Ausgestaltung der Vorrichtung ist das erste Modem ortsfest und/oder das zweite Modem beweglich angeordnet. Von Vorteil ist dabei, dass die Datenübertragung auch bei beweglichen Modems einfach sicher ausführbar ist.

Bei einer weiteren vorteilhaften Ausgestaltung der Vorrichtung beginnt und endet die Leitung an der ortsfesten Einspeisung der Energieübertragung, insbesondere an dem Frequenzumrichter, und ist vorzugsweise als langgestreckter Linienleiter, insbesondere mit einer Hinleitung und einer Rückleitung, ausgeführt. Von Vorteil ist dabei, dass die Daten und die Energie einfach und sicher übertragbar sind.

Bei einer weiteren vorteilhaften Ausgestaltung der Vorrichtung ist das zweite Modem in einer mobilen Einheit angeordnet, welche sich entlang der Leitung bewegt und die mobile Einheit weist eine Energieabgreifeinrichtung auf, welche die Energie der Energieübertragung berührungslos zur Versorgung einer Antriebseinrichtung der mobilen Einheit abgreift. Von Vorteil ist dabei, dass die Energieübertragung und die Datenübertragung einfach und sicher ist.

Bei einer weiteren vorteilhaften Ausgestaltung der Vorrichtung weist die Einspeisung der Energieübertragung einen Wechselstorm mit einer Frequenz auf, welcher in die Leitung eingeprägt ist und die Energieabgreifeinrichtung umfasst eine induktiv an die Leitung gekoppelte Sekundärwicklung, wobei die Sekundärwicklung mit einer zugehörigen Kapazität der Energieübertragungseinrichtung einen Parallelschwingkreis oder Reihenschwingkreis bildet, dessen Resonanzfrequenz der Frequenz des Wechselstromes im Wesentlichen entspricht. Von Vorteil ist dabei, dass die Energieübertragung besonders gut funktioniert und die Datenübertragung wenig beeinflusst.

Die Erfindung wird nun anhand eines Ausführungsbeispiels mit Bezugnahme auf die Zeichnung näher erläutert. Es zeigen rein schematisch:
- Fig. 1:: das gemessene farbige Hintergrundrauschen in beliebigen Einheiten in Abhängigkeit von der Zeit;
- Fig. 2:: dies spektrale Leistungsdicht in beliebigen Einheiten des in Figur 1 gezeigten Rauschens;
- Fig. 3:: die spektrale Leistungsdichte des Rauschens auf einer Leitung an einer ersten Position und einer zweiten Position auf der Leitung;
- Fig. 4:: die Dämpfung der Leitung zwischen der ersten Position und der zweiten Position berechnet aus den in Figur 3 gezeigten spektralen Leistungsdichten; und
- Fig. 5:: eine Skizze eines möglichen Aufbaus einer erfindungsgemäßen Vorrichtung zur Daten- und Energieübertragung.

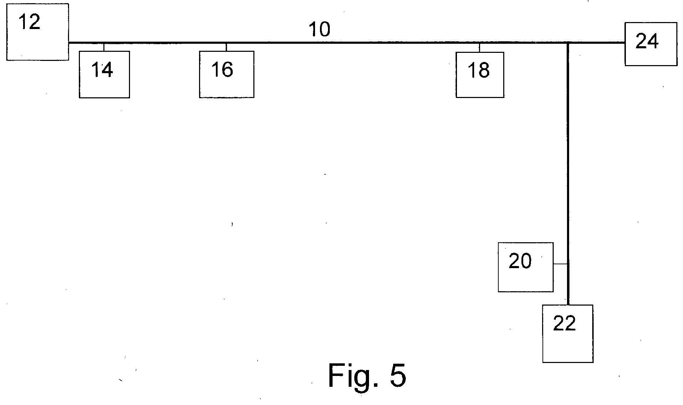

Figur 5 zeigt eine erfindungsgemäße Vorrichtung zur Daten und Energieübertragung über eine Leitung 10. Dies ist auch allgemein bekannt als eine PowerLan-Verbindung und wird nicht nur in Haushalten zur Ausnutzung der Stromverkabelung als LAN verwendet, sondern auch zunehmend im industriellen Einsatz zur Steuerung von Logistikanlagen und/oder Produktionsanlagen.

Allgemein bedeutet PowerLan, das ein und dieselbe Leitung 10 zur Energieübertragung und zur Datenübertragung genutzt wird. Dazu wird für die Energieübertragung im industriellen Einsatz beispielweise ein Frequenzbereich zwischen 10 und 500 kHz vorzugsweise zwischen 50 und 100 kHz oder zwischen 20 und 60 kHz, insbesondere eine Frequenz aus diesen Bereichen verwendet wird.

Für die Datenübertragung wird beispielsweise ein Frequenzbereich größer 0,1 MHz, vorzugsweise zwischen 0,5 und 100 MHz, insbesondere zwischen 0,9 und 1,5 MHz, verwendet wird. Vorzugsweise wird für die Datenübertragung ein anderer Frequenzbereich verwendet als für die Energieübertragung.

Die Leitung 10 ist vorzugsweise als langegestreckter Linienleiter mit einem Hinleiter und einem Rückleiter ausgebildet. Dies bedeute nicht, dass die Leitung 10 keine Verzweigungen aufweisen kann. Bei dem in Figur 5 gezeigten Ausführungsbeispiel ist die Leitung 10 zum Beispiel mehrfach verzweigt.

Die Vorrichtung weist ein erstes Modem 14 auf, welches an einer ersten Position mit der Leitung verbunden ist, bzw. an der ersten Position Datensignale von der Leitung 10 abgreift und/oder auf die Leitung 10 aufmoduliert.

Weiter weist die Vorrichtung ein zweites Modem 16 auf, welches an einer zweiten Position mit der Leitung 10 verbunden ist oder vorzugsweise berührungslos Datensignale von der Leitung 10 abgreift und/oder auf die Leitung 10 aufmoduliert

Das erste Modem 12 ist vorzugsweise bezüglich der Leitung 10 ortsfest angeordnet und das zweite Modem 16 ist vorzugsweise bezüglich der Leitung 10 beweglich angeordnet.

Bei dem in Figur 5 gezeigten Ausführungsbeispiel sind noch weitere Modems als drittes, viertes, fünftes, und sechstes Modem 18, 20, 22, 24 in entsprechender Art und Weise an die Leitung angeschlossen.

Bei einer bevorzugten Ausführungsform ist das erste Modem als Mastermodem und die weiteren Modems, insbesondere das zweite Modem 16 als Slavemodem ausgeführt.

In alternative Ausführungsformen sind auch andere logische Netzwerk-Topologien außer der Master-Slave-Topologie zur Verbindung der verschiedenen Modems denkbar.

Mit der Leitung ist eine vorzugsweise ortsfeste Einspeisung der Energieübertragung 12 verbunden. Die Einspeisung der Energieübertragung 12 weist vorzugsweise einen Frequenzumrichter mit der nötigen Ansteuerelektronik auf. Die Einspeisung der Energieübertragung 12 ist mit einem vorhandenen Netzanschluss mit dem öffentlichen Stromnetz verbunden.

Die Einspeisung der Energieübertragung prägt bei der besonders bevorzugten Ausführungsform einen Wechselstrom in die Leitung 10 ein. Dieser Wechselstrom weist eine Frequenz auf. Diese Frequenz liegt insbesondere in einem Bereich zwischen 10 und 500 kHz vorzugsweise zwischen 50 und 100 kHz oder zwischen 20 und 60 kHz. Bei einer besonders bevorzugten Ausführungsform beträgt die Frequenz 25kHz oder 50 kHz.

Die Hinleitung und die Rückleitung der Leitung 10 beginnen beziehungsweise enden insbesondere an der Einspeisung für die Energieübertragung 12. Die Hinleitung und die Rückleitung sind bei der Einspeisung für die Energieübertragung 12 insbesondere mit dem leitungsseitigen Ausgang des Frequenzumrichters verbunden.

Der Frequenzumrichter ist vorzugsweise als Zwei-Brücken Frequenzumrichter mit elektronischen Schaltelementen ausgeführt. Durch die Schaltvorgänge des Frequenzumrichters wird ein Rauschen auf die Leitung 10 aufgeprägt. Dieses Rauschen wird auch als farbiges Hintergrundrauschen bezeichnet.

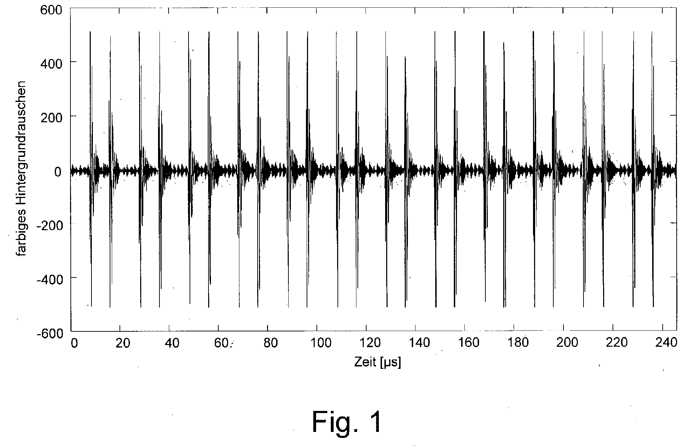

Dieses farbige Hintergrundrauschen ist in Figur 1 als Funktion der Zeit gezeigt. Die Peaks im zeitlichen Verlauf des farbigen Hintergrundrauschens entsprechen jeweils einem Schaltvorgang des Frequenzumrichters. Insbesondere die Schaltvorgänge des leitungsseitigen Wechselrichters des Frequenzumrichters sind für das Rauschen verantwortlich.

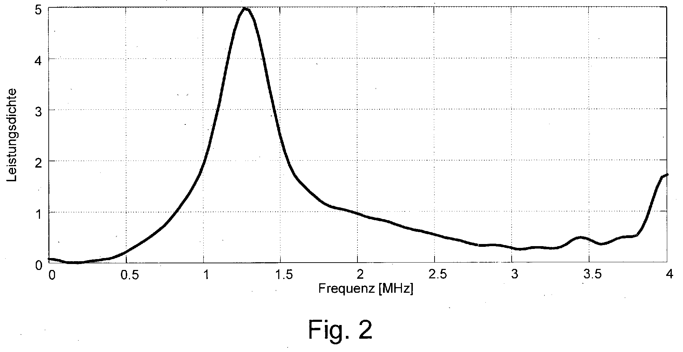

Somit wird das Rauschen durch die Energieübertragung hervorgerufen. Figur 2 zeigt die zugehörige spektrale Leistungsdichte des in Figur 1 gezeigten zeitlichen Verlaufs des farbigen Hintergrundrauschens.

Das farbige Hintergrundrauschen breitet sich in einer Ausbreitungsrichtung ausgehend von der Einspeisung für die Energieübertragung 12 über die Leitung 10 aus. Somit lässt sich die Dämpfung der Leitung zwischen zwei in der Ausbreitungsrichtung hintereinanderliegenden Modems, wie zum Beispiel das erste Modem 14 und das zwei Modem 16 durch Messen der Dämpfung des farbigen Hintergrundrauschens, im folgenden als Rauschen bezeichnet, bestimmen.

Dazu bestimmt zum Beispiel bei der in Figur 5 gezeigten Ausführungsform das erste Modem 14 einen Rauschwert des Rauschens an einer ersten Position auf der Leitung 10. Das zweite Modem 16 bestimmt einen entsprechenden Rauschwert des Rauschens an einer zweiten Position auf der Leitung. Eine Dämpfung der Leitung 10 zwischen dem ersten Modem 14 und dem zweiten Modem 16 wird als das Verhältnis des Rauschwertes zum entsprechenden Rauschwert bestimmt.

Die Berechnung der Dämpfung wird vorzugsweise mit der spektralen Funktion der Leistungsdichte beziehungsweise der Intensität des Rauschen beziehungsweise des farbigen Hintergrundrauschens berechnet. Das heißt, dass der Rauschwert und der entsprechende Rauschwert als Funktionen in Abhängigkeit von der Frequenz bestimmt werden.

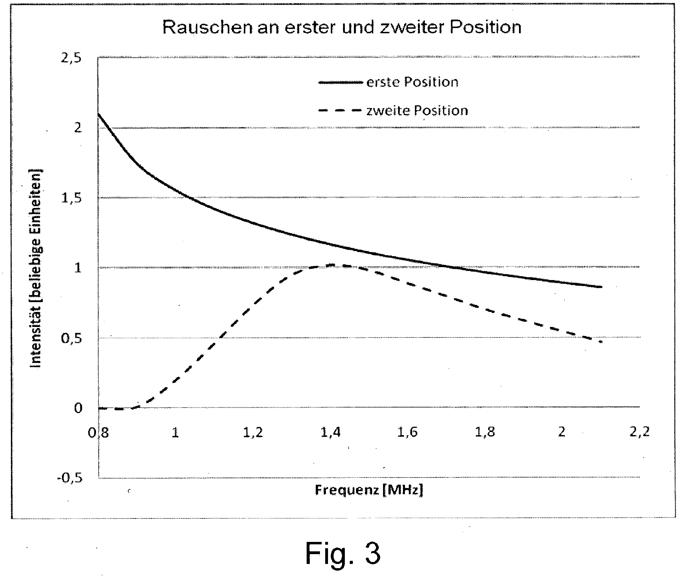

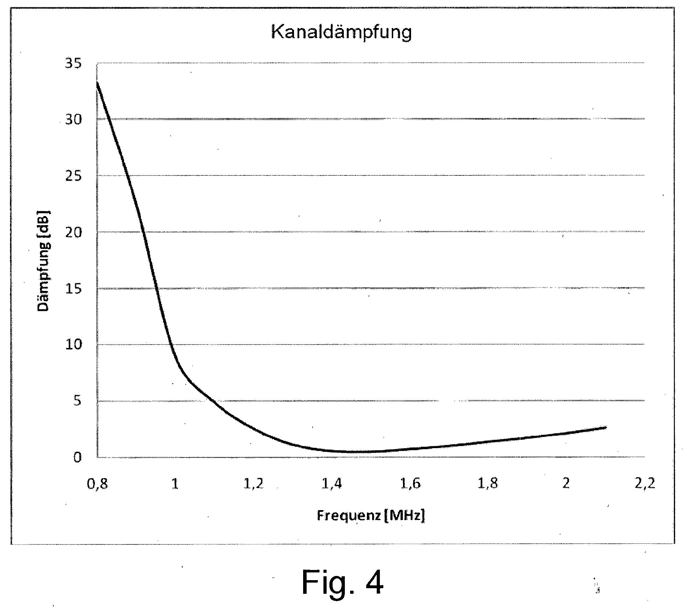

Ein Beispiel für die spektrale Intensität an der ersten Position und an der zweiten Positionen der Leitung 10 und der daraus berechneten Dämpfung der Leitung 10 zwischen der ersten Position und der zweiten Position ist in den Figuren 3 und 4 gezeigt.

Die daraus berechnete Dämpfung lässt sich nutzen, um den benutzbaren Spektralbereich auf der Leitung 10 für die Datenübertragung zu bestimmen. Für die Datenübertragung wird der Spektralbereich mit geringer Dämpfung der Leitung 10 benutzt. Das bedeutet, dass die Dämpfung des Frequenzbereiches zur Datenübertragung unterhalb eines kritischen Wertes liegt.

Der kritische Wert berechnet sich aus der Sendeleistung des Senders abzüglich der Empfindlichkeit des Empfängers der entsprechenden Modems. Dabei wird eine Sicherheitsspanne berücksichtigt.

Vorzugsweise wird zur Datenübertragung ein OFDM-Verfahren verwendet. Bei geeigneter Auflösung der Bestimmung der Dämpfung der Leitung 10 werden nur die Kanäle des OFDM-Verfahrens verwendet, welche eine Dämpfung der Leitung unterhalb des kritischen Wertes aufweisen.

Dies kann zum Beispiel bei dem in Figur 5 gezeigten Ausführungsbeispiel dazu führen, dass für die Datenübertragung zwischen dem ersten Modem 14 und dem zweiten Modem 16 andere OFDM-Kanäle verwendet werden, als für die Datenübertragung zwischen dem ersten Modem 14 und dem dritten Modem 18 oder zwischen dem vierten Modem 20 und dem fünften Modem 22.

Bei einer weiteren Ausführungsform ist zum Beispiel das zweite Modem 16 in einer mobilen Einheit angeordnet ist, welche sich entlang der Leitung 10 bewegt. Dies kann zum Beispiel ein fahrerloses Transportsystem sein. Die Leitung 10 ist in diesem Fall zum Beispiel in den Boden eingelassen. Die mobile Einheit weist eine Energieabgreifeinrichtung auf, welche die Energie der Energieübertragung berührungslos zur Versorgung einer Antriebseinrichtung der mobilen Einheit abgreift.

Weiter weist die mobile Einheit eine Datenabgreifeinrichtung auf, welche das Datensignal von der Leitung 10 abgreift und/oder auf die Leitung 10 ein zu sendendes Signal aufmoduliert. Die geschieht vorzugsweise berührungslos mittels einer induktiven oder kapazitiven Kopplung.

Die Energieabgreifeinrichtung umfasst bei einer besonders bevorzugten Ausführungsform eine induktiv an die Leitung gekoppelte Sekundärwicklung. Die Sekundärwicklung bildet mit einer zugehörigen Kapazität der Energieübertragungseinrichtung einen Parallelschwingkreis oder Reihenschwingkreis. Dessen Resonanzfrequenz entspricht im Wesentlichen, der Frequenz des Wechselstromes. Die Frequenz des Wechselstroms wird durch den Frequenzumrichter bestimmt.

Ein weiteres Ausführungsbeispiel der Erfindungsgemäßen Vorrichtung wird bei einer Elektrohängebahn oder Einschienenhängebahn zur Kommunikation der Steuerung der Einschienenhängebahn mit den Läuferkatzen verwendet. Dafür ist die Leitung 10 entsprechend entlang der Schiene der Hängebahn verlegt. Die Läuferkatze greift von der Leitung 10 dann die notwendige Energie zum betrieben ihres Antriebs sowie die Daten zur Steuerung des Antriebs vorzugsweise berührungslos ab.

In Abhängigkeit der Position der mobilen Einheit, d.h. für obige Beispiele des fahrerlosen Transportsystems oder der Laufkatze, wird die Dämpfung des Abschnitts der Leitung 10 zwischen den entsprechenden Modems bestimmt und laufend angepasst. Dadurch können abhängig von der Position der mobilen Einheit unterschiedliche Kanäle des OFDM-Verfahrens zur Datenübertragung verwendet werden. Diese entsprechen jeweils dem obigen Kriterium der geringen Dämpfung.

**Bei weiteren erfindungsgemäßen Ausführungsbeispielen wird statt der Leitung eine andere Übertragungsverbindung verwendet. Beispielsweise eine Funkverbindung für Mobilfunkgeräte.**

### Bezugszeichenliste

- 10: Leitung
- 12: Einspeisung der Energieübertragung
- 14: erstes Modem
- 16: zweites Modem
- 18: drittes Modem
- 20: viertes Modem
- 22: fünftes Modem
- 24: sechstes Modem

## Patentansprüche

1. Verfahren zur Daten und Energieübertragung über eine Übertragungsverbindung (10)
wobei die **Übertragungsverbindung** (10) zur Energieübertragung und zur Datenübertragung
genutzt wird,
wobei ein erstes Modem (14) und ein zweites Modem (16) zur Datenübertragung an die **Übertragungsverbindung** (10) angeschlossen sind,
**wobei** das erste Modem (14) einen **ersten** Rauschwert an einer ersten Position auf der **Übertragungsverbindung** (10) bestimmt,
das zweite Modem (16) einen **zweiten** Rauschwert an einer zweiten Position auf der **Übertragungsverbindung** (10) bestimmt,
und eine Dämpfung der **Übertragungsverbindung** (10) als Verhältnis des **ersten** Rauschwertes zum **zweiten** Rauschwert bestimmt wird,
**wobei für die Datenübertragung ein anderer Frequenzbereich verwendet wird als für die Energieübertragung,**
**wobei das Rauschen durch die Energieübertragung hervorgerufen wird,**
**wobei zur Datenübertragung ein OFDM-Verfahren verwendet wird,**
**wobei nur diejenigen Kanäle des OFDM-Verfahrens verwendet werden, welche eine Dämpfung unterhalb eines kritischen Wertes aufweisen.**

2. Verfahren nach Anspruch 1,
**dadurch gekennzeichnet, dass**
der erste Rauschwert und der **zweite** Rauschwert spektral für denselben Frequenzwert bestimmt werden.

3. **Verfahren nach Anspruch 1 oder 2,**
**dadurch gekennzeichnet, dass**
**der erste Rauschwert und der zweite Rauschwert spektral für mehrere Frequenzwerte bestimmt werden.**

4. Verfahren nach Anspruch 1, 2 oder 3,
**dadurch gekennzeichnet, dass**
das die Energie zur Energieübertragung mittels eines Frequenzumrichters in die Übertragungsverbindung (10)
eingespeist wird, wobei das erste und zweite Rauschen durch die Schaltimpulse des leitungsseitigen Wechselrichters des Frequenzumrichters hervorgerufen wird.

5. Verfahren nach einem der Ansprüche 1 bis 4,
**dadurch gekennzeichnet, dass**
für die Energieübertragung ein Frequenzbereich zwischen 10 und 500 kHz verwendet wird.

6. Verfahren nach einem der vorangegangenen Ansprüche,
**dadurch gekennzeichnet, dass**
für die Datenübertragung ein Frequenzbereich größer als 0,1 MHz verwendet wird.

7. Verfahren nach einem der vorangegangenen Ansprüche,
**dadurch gekennzeichnet, dass**
das erste Modem (14) ortsfest angeordnet ist und das zweite Modem (16) in einer mobilen Einheit angeordnet ist,
wobei die mobile Einheit entlang der Übertragungsverbindung bewegt wird,
wobei die Übertragungsverbindung langgestreckt ist,
wobei die Daten der Datenübertragung und die Energie der Energieübertragung berührungslos von der mobilen Einheit von der Übertragungsverbindung abgegriffen werden.

8. Verfahren nach Anspruch 7,
**dadurch gekennzeichnet, dass**
abhängig von der Position der mobilen Einheit unterschiedliche Kanäle verwendet werden.

9. Vorrichtung zur Daten und Energieübertragung über eine Übertragungsverbindung,
**dadurch gekennzeichnet, dass**
die Vorrichtung Mittel zum Ausführen des Verfahrens nach einem der vorangegangenen Ansprüche umfasst.

10. Vorrichtung nach Anspruch 9,
**dadurch gekennzeichnet, dass**
das erste Modem (14) ortsfest und/oder das zweite Modem (16) beweglich angeordnet ist.

11. Vorrichtung nach einem der Ansprüche 9 oder 10,
**dadurch gekennzeichnet, dass**
die Übertragungsverbindung an der ortsfesten Einspeisung (12) der Energieübertragung beginnt und endet und als langgestreckter Linienleiter ausgeführt ist.

12. Vorrichtung nach einem der Ansprüche 9 bis 11,
**dadurch gekennzeichnet, dass**
das zweite Modem (16) in einer mobilen Einheit angeordnet ist, welche sich entlang der Übertragungsverbindung bewegt und die mobile Einheit eine Energieabgreifeinrichtung aufweist, welche die Energie der Energieübertragung berührungslos zur Versorgung einer Antriebseinrichtung der mobilen Einheit abgreift,

13. Vorrichtung nach Anspruch 12,
**dadurch gekennzeichnet, dass**
**die Einspeisung (12) der Energieübertragung einen Wechselstorm mit einer Frequenz aufweist, welcher in die Übertragungsverbindung eingeprägt ist,**
**die Energieabgreifeinrichtung eine induktiv an die Übertragungsverbindung gekoppelte Sekundärwicklung umfasst,**
**wobei die Sekundärwicklung mit einer zugehörigen Kapazität der Energieübertragungseinrichtung einen Parallelschwingkreis oder Reihenschwingkreis bildet, dessen Resonanzfrequenz der Frequenz des Wechselstromes im Wesentlichen entspricht.**

## Claims

1. A method for data and energy transmission via a transmission connection (10),
wherein the transmission connection (10) is used for energy transmission and for data transmission,
wherein a first modem (14) and a second modem (16) are connected to the transmission connection (10) for data transmission,
wherein the first modem (14) determines a first noise value at a first position on the transmission connection (10),
the second modem (16) determines a second noise value at a second position on the transmission connection (10),
and damping of the transmission connection (10) is determined as a ratio of the first noise value to the second noise value,
wherein a different frequency range is used for the data transmission than for the energy transmission,
wherein the noise is caused by the energy transmission,
wherein an OFDM method is used for the data transmission,
wherein only those channels of the OFDM method which have damping below a critical value are used.

2. A method according to Claim 1,
**characterised in that**
the first noise value and the second noise value are determined spectrally for the same frequency value.

3. A method according to Claim 1 or 2,
**characterised in that**
the first noise value and the second noise value are determined spectrally for a plurality of frequency values.

4. A method according to Claim 1, 2 or 3,
**characterised in that**
the energy for the energy transmission is fed into the transmission connection (10) by means of a frequency converter, the first and second noises being caused by the switching pulses of the line-side inverter of the frequency converter.

5. A method according to one of Claims 1 to 4,
**characterised in that**
a frequency range of between 10 and 500 kHz is used for the energy transmission.

6. A method according to one of the preceding claims,
**characterised in that**
a frequency range of greater than 0.1 MHz is used for the data transmission.

7. A method according to one of the preceding claims,
**characterised in that**
the first modem (14) is arranged to be stationary and the second modem (16) is arranged in a mobile unit,
the mobile unit being moved along the transmission connection,
the transmission connection being elongate,
the data of the data transmission and the energy of the energy transmission being picked up in contact-free manner by the mobile unit of the transmission connection.

8. A method according to Claim 7,
**characterised in that**
different channels are used dependent on the position of the mobile unit.

9. A device for data and energy transmission via a transmission connection,
**characterised in that**
the device comprises means for carrying out the method according to one of the preceding claims.

10. A device according to Claim 9,
**characterised in that**
the first modem (14) is arranged to be stationary and/or the second modem (16) is arranged to be movable.

11. A device according to one of Claims 9 or 10,
**characterised in that**
the transmission connection begins and ends at the stationary infeed (12) of the energy transmission and is embodied as an elongate line conductor.

12. A device according to one of Claims 9 to 11,
**characterised in that**
the second modem (16) is arranged in a mobile unit which moves along the transmission connection and the mobile unit has an energy pickup means which picks up the energy of the energy transmission in contact-free manner to supply a drive means of the mobile unit.

13. A device according to Claim 12,
**characterised in that**
the infeed (12) of the energy transmission has an alternating current with a frequency which is injected into the transmission connection,
the energy pickup means comprises a secondary winding coupled inductively to the transmission connection,
the secondary winding forming a parallel resonant circuit or series resonant circuit with an associated capacitor of the energy transmission means, the resonant frequency of which circuit substantially corresponds to the frequency of the alternating current.

## Revendications

1. Procédé de transmission de données et d'énergie par une liaison de transmission (10),
la liaison de transmission (10) étant utilisée pour la transmission d'énergie et pour la transmission de données,
un premier modem (14) et un deuxième modem (16) étant connectés à la liaison de transmission (10) pour la transmission de données,
le premier modem (14) déterminant une première valeur de bruit à une première position sur la liaison de transmission (10),
le deuxième modem (16) déterminant une deuxième valeur de bruit à une deuxième position sur la liaison de transmission (10),
et un amortissement de la liaison de transmission (10) étant déterminé comme le rapport entre la première valeur de bruit et la deuxième valeur de bruit,
une autre gamme de fréquences étant utilisée pour la transmission de données que pour la transmission d'énergie,
le bruit étant provoqué par la transmission d'énergie,
un procédé OFDM étant utilisé pour la transmission de données,
seuls les canaux du procédé OFDM qui présentent un amortissement inférieur à une valeur critique étant utilisés.

2. Procédé selon la revendication 1,
**caractérisé en ce que**
la première valeur de bruit et la deuxième valeur de bruit sont déterminées spectralement pour la même valeur de fréquence.

3. Procédé selon la revendication 1 ou 2,
**caractérisé en ce que**
la première valeur de bruit et la deuxième valeur de bruit sont déterminées spectralement pour plusieurs valeurs de fréquence.

4. Procédé selon la revendication 1, 2 ou 3,
**caractérisé en ce que**
l'énergie pour la transmission d'énergie est injectée dans la liaison de transmission (10) au moyen d'un variateur de fréquence, le premier et le deuxième bruit étant provoqués par les impulsions de commutation de l'onduleur côté ligne du variateur de fréquence.

5. Procédé selon l'une des revendications 1 à 4,
**caractérisé en ce que**
une gamme de fréquences comprises entre 10 et 500 kHz est utilisée pour la transmission d'énergie.

6. Procédé selon l'une des revendications précédentes,
**caractérisé en ce que**
une gamme de fréquences supérieures à 0,1 MHz est utilisée pour la transmission de données.

7. Procédé selon l'une des revendications précédentes,
**caractérisé en ce que**
le premier modem (14) est disposé à un emplacement fixe et le deuxième modem (16) est disposé dans une unité mobile,
l'unité mobile étant déplacée le long de la liaison de transmission,
la liaison de transmission étant étendue en longueur,
les données de la transmission de données et l'énergie de la transmission d'énergie étant prélevées sans contact de la liaison de transmission par l'unité mobile.

8. Procédé selon la revendication 7,
**caractérisé en ce que**
différents canaux sont utilisés en fonction de la position de l'unité mobile.

9. Dispositif de transmission de données et d'énergie par une liaison de transmission,
**caractérisé en ce que**
le dispositif comprend des moyens pour mettre en oeuvre le procédé selon l'une des revendications précédentes.

10. Dispositif selon la revendication 9,
**caractérisé en ce que**
le premier modem (14) est disposé à un emplacement fixe et le deuxième modem (16) est mobile.

11. Dispositif selon l'une des revendications 9 ou 10,
**caractérisé en ce que**
la liaison de transmission commence et finit à l'injection fixe (12) de la transmission d'énergie et est réalisée sous la forme d'un conducteur de ligne étendu en longueur.

12. Dispositif selon l'une des revendications 9 à 11,
**caractérisé en ce que**
le deuxième modem (16) est disposé dans une unité mobile qui se déplace le long de la liaison de transmission et l'unité mobile présente un dispositif de prélèvement d'énergie qui prélève sans contact l'énergie de la transmission d'énergie pour alimenter un dispositif d'entraînement de l'unité mobile.

13. Dispositif selon la revendication 12,
**caractérisé en ce que**
l'injection (12) de la transmission d'énergie présente un courant alternatif avec une fréquence, lequel est appliqué dans la liaison de transmission,
le dispositif de prélèvement d'énergie comprend un enroulement secondaire couplé par induction à la liaison de transmission,
l'enroulement secondaire formant avec une capacité associée du dispositif de transmission d'énergie un circuit oscillant parallèle ou un circuit oscillant série dont la fréquence de résonance correspond sensiblement à la fréquence du courant alternatif.
